# EUROPÄISCHE PATENTANMELDUNG

(11) **EP 3 379 675 A1**
(43) Veröffentlichungstag der Anmeldung: **26.09.2018**
(21) Anmeldenummer: 17162620.3
(22) Anmeldetag: 23.03.2017
(51) Int. Cl.: H02J 1/14, H02J 3/32, H02M 7/06

(54) **OPTIMIERTER AUFBAU EINES GLEICHSPANNUNGSSYSTEMS SOWIE VERFAHREN BEI AUSFALL DES SPEISENDEN NETZES**

(71) Anmelder: Siemens Aktiengesellschaft, 80333 München (DE)
(72) Erfinder: Schierling, Hubert, 91052 Erlangen (DE); Weis, Benno, 91334 Hemhofen (DE)

(57) **Zusammenfassung**

Die Erfindung betrifft ein elektrisches Gleichspannungssystem, welches an wenigstens ein Wechselspannungsnetz (1) gekoppelt ist. Mittels einer Einspeiseschaltung (5) wird dreiphasige Wechselspannung in Gleichspannung gewandelt, welche ein Gleichspannungssystem speist. Darin befinden sich Geräte (13, 14, 21, 23, 27, 22, 17, 19, 20), die jeweils eine dezentrale Vorladeeinrichtung (7) aufweisen. Zudem betrifft die Erfindung ein Verfahren zum Betreiben eines derartigen elektrischen Gleichspannungssystems in Abhängigkeit von einem an der Sammelschiene (12) anliegenden Spannungswert.

## Beschreibung

Die Erfindung betrifft ein elektrisches Gleichspannungssystem, welches an wenigstens ein Wechselspannungsnetz zur Einspeisung elektrischer Energie in das Gleichspannungssystem gekoppelt ist sowie ein Verfahren zum Betreiben eines elektrischen Gleichspannungssystems.

Eine Verteilung elektrischer Energie auf Basis von Gleichspannung wird innerhalb von Fabrikanlagen häufig angewandt, da dadurch ein Energieaustausch zwischen verschiedenen Geräten mühelos realisiert werden kann und Speicher sowie regenerative Energiequellen bequem angebunden werden können.

Typischerweise wird hierfür ein Gleichspannungssystem mittels eines passiven Diodengleichrichters an ein bestehendes Dreiphasennetz angebunden, aus welchem die benötigte elektrische Energie bezogen wird. Zudem besteht die Möglichkeit, einen aktiven Gleichrichter zu nutzen, der die Einspeisung elektrischer Energie mittels IGBTs (kurz für insulated-gate bipolar transistor; Bipolartransistor mit isolierter Gate-Elektrode) bewerkstelligt.

Bei beiden Varianten der Einspeisung darf der Wert der Gleichspannung nicht wesentlich niedriger sein als der Wert der gleichgerichteten Dreiphasenwechselspannung. Denn zu große Differenzen zwischen den beiden Spannungen versuchen sich selbst auszugleichen. Ein nicht steuerbarer Strom, der den Wert der Gleichspannung im Gleichspannungssystem, auch DC-Spannung genannt, auf den Wert der gleichgerichteten Dreiphasenwechselspannung anzugleichen versucht, würde fließen und Komponenten, insbesondere Leistungshalbleiter, gefährden.

Insbesondere beim Anlauf eines ungeladenen Gleichspannungssystems, das an ein Dreiphasenwechselspannungsnetz angebunden ist, ist ein derartiger Ausgleichsstrom zu begrenzen.

Aus der DE 19739553 A1 ist daher eine Vorladeschaltung für einen am Ausgang eines netzgeführten Stromrichters angeschlossenen Kondensator bekannt, wobei der Stromrichter als ungesteuerter Gleichrichter ausgeführt ist.

Zudem behandelt die EP 2680421 A1 einen Frequenzumrichter zum Betreiben einer elektrischen Maschine an einem elektrischen Netz. Der Frequenzumrichter weist eine Einspeiseeinheit, einen Umrichter sowie einen die Einspeiseeinheit mit dem Umrichter verbindenden Gleichspannungs-Zwischenkreis auf. In dem Gleichspannungs-Zwischenkreis ist zumindest ein Zwischenkreiskondensator bereitgestellt. Aus der EP 2680421 A1 geht auch ein Verfahren zum Aufladen des Zwischenkreiskondensators, was als Vorladen bezeichnet wird, hervor.

Wenn das speisende Dreiphasenwechselspannungsnetz den Energieverbrauch des angekoppelten Gleichspannungssystems nicht decken kann oder sogar ausfällt, bewirkt dies ein Absinken des Spannungswerts im Gleichspannungssystem. Die den Verbrauchern im Gleichspannungssystem, auch DC-Netz genannt, fehlende Energie wird zunächst im Gleichspannungssystem befindlichen Kapazitäten entnommen. Lange Ausfallzeiten können so nicht überbrückt werden.

Zudem ergeben sich weitere Probleme: Bleibt ein Schalter in der Vorladeschaltung beim Absinken der Gleichspannung geschlossen, entsteht bei Wiederkehr der Dreiphasenwechselspannung ein nicht steuerbarer, schnell ansteigender und hoher Nachladestrom, welcher empfindliche Bauteile beschädigt oder sogar zerstört.

Wird der Schalter in der Vorladeschaltung beim Absinken der Gleichspannung geöffnet, wird ein Nachladestrom auf einen Vorladestrom begrenzt. Allerdings reicht dieser Strom nicht aus, um die für den Weiterbetrieb des DC-Netzes erforderliche elektrische Energie bereit zu stellen. Die Gleichspannung im Gleichspannungssystem sinkt daher weiter ab und die Anlage muss schließlich abgeschaltet werden.

Der Erfindung liegt die Aufgabe zugrunde, Ausfälle eines speisenden Dreiphasenwechselspannungsnetzes ausreichend lange zu überbrücken ohne empfindliche Komponenten bei Wiederkehr einer Dreiphasenwechselspannung zu gefährden.

Die Lösung der Aufgabe gelingt durch ein elektrisches Gleichspannungssystem, welches an wenigstens ein Wechselspannungsnetz zur Einspeisung elektrischer Energie in das Gleichspannungssystem gekoppelt ist, wobei mehrere im Gleichspannungssystem befindliche Geräteeinheiten über jeweils wenigstens eine dezentrale Vorladeeinrichtung mit einer Sammelschiene verbunden sind.

Ferner wird die Aufgabe durch ein Verfahren zum Betreiben eines elektrischen Gleichspannungssystems, welches mittels einer Einspeiseschaltung an wenigstens ein Wechselspannungsnetz zur Einspeisung elektrischer Energie in das Gleichspannungssystem gekoppelt ist, wobei das elektrische Gleichspannungssystem, welches Geräteeinheiten umfasst, die über jeweils wenigstens eine dezentrale Vorladeeinrichtung mit einer Sammelschiene verbunden sind, in Abhängigkeit von einem an der Sammelschiene anliegenden Spannungswert betrieben wird.

Dieser Spannungswert wird im Folgenden auch mit "Gleichspannung im Gleichspannungssystem" oder "DC-Spannung" bezeichnet.

Die Erfindung bietet den Vorteil, dass die in einem elektrischen Gleichspannungssystem befindlichen Geräte über wenigstens eine dezentrale Vorladeeinrichtung verfügen. Dieser optimierte Aufbau eines Gleichspannungssystems ermöglicht einen verbesserten Anlauf eines ungeladenen DC-Netzes, ein sicheres Verhalten während eines Ausfalls eines speisenden Dreiphasenwechselspannungsnetzes sowie eine lange Überbrückung einer Ausfallzeit. Zudem werden Differenzen zwischen der Gleichspannung im DC-Netz und einem Wert einer gleichgerichteten dreiphasigen Wechselspannung vermieden, weshalb keine Ströme fließen, die empfindliche Bauteile beschädigen.

Das elektrische Gleichspannungssystem ist über eine Einspeiseschaltung an ein Wechselspannungsnetz angekoppelt. Das Wechselspannungsnetz ist vorzugsweise als Dreiphasenwechselspannungsnetz ausgeführt.

Die Einspeiseschaltung umfasst gemäß einer vorteilhaften Ausführung einen Schalter pro Phase, sodass die
Einspeiseschaltung vom Dreiphasenwechselspannungsnetz trennbar ist, eine Drossel pro Phase sowie einen Gleichrichter. Im Gleichrichter werden vorzugsweise passive Bauelemente, insbesondere Dioden, oder steuerbare Halbleiter, insbesondere IGBTs, genutzt, um die dreiphasige Wechselspannung in eine Gleichspannung zu verwandeln.

Zudem verfügt die Einspeiseschaltung über einen Glättungskondensator. Der Kondensator weist einen nur kleinen Kapazitätswert auf, sodass bei einer Zuschaltung des elektrischen Gleichspannungssystems an das Dreiphasenwechselspannungsnetz ein hierbei entstehender Ladestrom die im Gleichspannungssystem befindlichen Komponenten nicht beschädigt. Alternativ kann die Einspeiseeinheit auch eine Vorladeeinrichtung enthalten, die jedoch nur auf das Vorladen des Kondensators der Einspeisung selbst ausgelegt sein muss.

Die Einspeiseschaltung speist über ein Schalt- und Schutzorgan eine Sammelschiene im Gleichspannungssystem. An dieser Sammelschiene sind erfindungsgemäß mindestens zwei Geräteeinheiten über jeweils ein dezentrales Schalt- und Schutzorgan mit Vorladewiderstand, nachfolgend auch kurz als dezentrale Vorladeeinrichtung bezeichnet, angekoppelt.

Als Geräteeinheit im Sinne der Erfindung werden ein einzelnes Gerät, ein Zusammenschluss mehrerer Geräte und/oder ein Subnetz verstanden.

Mögliche Geräte sind Verbraucher, insbesondere Lüfter, Motoren, Roboter, Pumpen, Heizungen und Wechselrichter, oder Energiespeichereinheiten bzw. Energiespeicher, insbesondere kapazitive Speicher und Batterien, oder Energiequellen, insbesondere Photovoltaik-Anlagen.

Erfindungsgemäß sind den genannten Geräteeinheiten nicht nur Schalt- und Schutzorgane, sondern jeweils eine dezentrale Vorladeeinrichtung zugeordnet.

Vorteilhaft wird pro Geräteeinheit genau eine dezentrale Vorladeeinrichtung eingesetzt. Diese umfasst wenigstens einen Widerstand, der parallel zu vorzugsweise zwei antiseriell angeordneten steuerbaren Halbleitern mit antiparalleler Freilaufdiode angeordnet ist, wobei diese Schaltanordnung in Serie zu wenigstens einem Schalter angeordnet ist.

Alternativ kann der Schalter auch in Reihe zu dem Widerstand statt in Reihe zu der gesamten Schaltanordnung angeordnet sein. Diese Lösung bietet den Vorteil, dass der Schalter bei dem leitenden steuerbaren Halbleiter nicht vom Laststrom durchflossen wird.

Die dezentrale Vorladeeinrichtung kann in die jeweilige Geräteeinheit integriert oder der jeweiligen Geräteeinheit vorgeschaltet sein.

Wird der Schalter geschlossen und sperrt wenigstens ein steuerbarer Halbleiter, fließt der Strom über den Widerstand. Ist der Schalter geschlossen und leitet wenigstens der steuerbare Halbleiter, der für eine Überbrückung des Widerstands nötig ist, fließt der Strom nicht durch den Widerstand, sondern durch den leitenden steuerbaren Halbleiter und die Freilaufdiode des anderen in der dezentralen Vorladeeinrichtung angeordneten steuerbaren Halbleiters mit antiparalleler Freilaufdiode. Ist der Schalter geöffnet, fließt kein Strom, da kein geschlossener Stromkreis besteht.

Vorteilhaft werden als Halbleiter bipolare Transistoren, insbesondere IGBTs, oder Feldeffekttransistoren, insbesondere MOSFETs, eingesetzt.

Der Einsatz einer dezentralen Vorladeeinrichtung ist insofern vorteilhaft, als auf eine in die Einspeiseschaltung integrierte Vorladeeinheit verzichtet werden kann, die eine genaue Kenntnis einer Gesamtkapazität des Gleichspannungssystems erfordert und die auf die Vorladung der Gesamtkapazität ausgelegt sein muss.

Zudem kann ein mit dezentralen Vorladeeinrichtungen ausgestattetes Gleichspannungssystem problemlos um weitere Netzabschnitte erweitert werden, da die dezentralen Vorladeeinrichtungen nur auf ihr nachgelagerte Subnetze und/oder Geräteeinheiten ausgelegt sein müssen.

Vorteilhaft können alle vorhandenen Energiespeicher und/oder -quellen für einen Weiterbetrieb des Gleichspannungssystems herangezogen werden. Ein geordnetes Herunterfahren oder Abschalten von Geräteeinheiten, insbesondere von Robotern oder Motoren, wird dadurch erreicht.

Erfolgt eine Zuschaltung des Gleichspannungssystems an das Dreiphasenwechselspannungsnetz durch die in der Einspeiseschaltung befindlichen Schalter, so wird zuerst die Einspeisung selbst vorgeladen. Hierzu sind die Schalter in allen dezentralen Vorladeeinrichtungen geöffnet. Ist die Einspeiseschaltung vorgeladen und deren evtl. vorhandener Vorladewiderstand überbrückt, so beträgt die DC-Spannung im Gleichspannungssystem den Wert der gleichgerichteten Spannung des Dreiphasenwechselspannungsnetzes. Nachfolgend werden vorzugsweise alle dezentralen Vorladeeinrichtungen im Gleichspannungssystem aktiviert. Der Schalter vorzugsweise einer jeden dezentralen Vorladeeinrichtung wird geschlossen und eine Steuereinheit sperrt die IGBTs, sodass ein Ladestrom über den Widerstand fließt. Die Kapazitäten im Gleichspannungssystem werden dadurch geladen.

Sobald die Differenz zwischen der im Gleichspannungssystem bestehenden DC-Spannung und der DC-Spannung einer Geräteeinheit einen Wert unterschreitet, wird der Vorladevorgang für diese Geräteeinheit beendet und die dezentrale Vorladeeinrichtung deaktiviert, indem jeweils ein IGBT leitend geschaltet wird. Die geringe Spannungsdifferenz garantiert einen nur kleinen Ausgleichsstrom, welcher keine komponentenschädigende Wirkung aufweist. Eine aktive Einspeiseschaltung, insbesondere mit IGBTs, nach dem Stand der Technik, oder eine passive Einspeiseschaltung, insbesondere mit Dioden, nach dem Stand der Technik, speisen elektrische Energie in das Gleichspannungssystem. Der Vorladevorgang für das Gleichspannungssystem ist abgeschlossen, wenn alle dezentralen Vorladeeinrichtungen deaktiviert sind.

Die DC-Spannung und/oder die netzseitige dreiphasige Wechselspannung werden von einer Überwachungseinheit, die als Teil der Einspeiseschaltung und/oder vorteilhaft in jeder dezentralen Vorladeeinrichtung ausgeführt ist, beobachtet. Ist in jeder dezentralen Vorladeeinrichtung eine Überwachungseinheit zur Spannungsmessung integriert, ist keine fehleranfällige und kostenintensive Kommunikationslösung zwischen den einzelnen Vorladeeinrichtungen und einer übergeordneten Überwachungseinheit nötig.

Vorteilhaft wird bei einer aktiven Einspeiseschaltung die Gleichspannung im Gleichspannungssystem von einer Regelungseinheit vorzugsweise auf einen Wert geregelt, der mindestens dem Scheitelwert der Netzspannung an einer oberen Toleranzgrenze entspricht.

Erfindungsgemäß reagiert das Gleichspannungssystem mit definierten Maßnahmen auf verschiedene Zustände seiner Spannung, wie nachfolgend erläutert wird.

Liegt die DC-Spannung über einem Mindestwert Umin1 oder ist so groß wie Umin1, wird das Gleichspannungssystem mit seinen Geräteeinheiten im Normalbetrieb betrieben. Das Gleichspannungssystem ist mittels einer Einspeiseschaltung mit dem Dreiphasenwechselspannungsnetz verbunden, die dezentralen Vorladeeinrichtungen sind deaktiviert.

Wird ein Ausfall des speisenden Dreiphasenwechselspannungsnetzes oder ein Absinken der DC-Spannung unter den Mindestwert Umin1 insbesondere von einer Überwachungseinheit erkannt, werden daraufhin von einer Steuereinheit im Wesentlichen folgende Maßnahmen ergriffen: Die Einspeiseschaltung wird vom Dreiphasenwechselspannungsnetz getrennt. Ein Sollwert der DC-Spannung wird zudem vorzugsweise auf den Scheitelwert der Netzspannung an einer oberen Toleranzgrenze angehoben. Im Gleichspannungssystem befindliche steuerbare Energiespeicher und/oder -quellen werden dadurch von einer Steuereinheit veranlasst, elektrische Leistung in das DC-Netz einzuspeisen.

Vorteilhaft werden zudem weniger kritische Verbraucher, insbesondere Lüfter und/oder Pumpen und/oder Heizungen, von der Steuereinheit abgeschaltet oder abgeregelt, um den Leistungsverbrauch zu senken. Steigt der Wert der DC-Spannung durch Abschaltung weniger kritischer Verbraucher oder durch wenigstens eine weitere Leistungseinspeisung einer Energiequelle, insbesondere durch eine Photovoltaik-Anlage, an und überschreitet den Wert Umin1, wird das Gleichspannungssystem wieder normal betrieben und die Einspeiseschaltung zugeschaltet. Da der Wert der DC-Spannung des Gleichspannungssystems größer als Umin1 ist, ist der Nachladestrom auf einen unkritischen Wert begrenzt.

"Überschreiten" heißt: Der Wert ändert sich von einem Wert unterhalb des Mindestwerts (hier: Umin1) zu einem Wert oberhalb des Mindestwerts.

Umgekehrt heißt "unterschreiten": Der Wert ändert sich von einem Wert oberhalb des Mindestwerts zu einem Wert unterhalb des Mindestwerts.

Die Maßnahmen werden vorzugsweise unmittelbar nach Über- oder Unterschreiten des jeweiligen Mindestwerts ausgeführt. Jedoch ist es auch möglich, die jeweilige Maßnahme erst um eine bestimmte Wartezeit verzögert auszuführen.

Ist die Summe der von den Verbrauchern im DC-Netz verbrauchten Leistung jedoch weiterhin größer als die Summe der Leistung, die von steuerbaren Energiespeichern und/oder -quellen bereitgestellt wird, sinkt die Gleichspannung im Gleichspannungssystem weiter ab.

Sinkt die DC-Spannung weiter und unterschreitet einen Mindestwert Umin2, werden - vorzugsweise mittels wenigstens einer Steuereinheit - die dezentralen Vorladeeinrichtungen aktiviert. Die Einspeisung elektrischer Energie durch im Gleichspannungssystem befindliche Energiespeicher, insbesondere kapazitive Speicher, und/oder Energiequellen, insbesondere Photovoltaik-Anlagen, wird unterbrochen. Alle im Gleichspannungssystem befindlichen Verbraucher werden abgeschaltet.

Das Unterschreiten eines Mindestwerts Umin3 kann als Signal dafür genutzt werden, dass alle dezentralen Vorladeeinrichtungen aktiviert sind. Dieses Signal ist eine Voraussetzung dafür, dass die Einspeisung bei Wiederkehr des Dreiphasenwechselspannungsnetzes zuschalten darf. Das Gleichspannungssystem befindet sich in einer Wartestellung und erwartet eine Wiederkehr des Dreiphasenwechselspannungsnetzes.

Bei Wiederkehr des Dreiphasenwechselspannungsnetzes beginnt der Vorladevorgang erneut wie bereits bei der Zuschaltung des Gleichspannungssystems beschrieben. Ein hoher und schnell ansteigender Ladestrom tritt hierbei nicht auf, weshalb empfindliche Bauteile nicht gefährdet werden.

In einer alternativen Ausführungsform wird bei einer Gleichspannung im Gleichspannungssystem, die einen Mindestwert Umin2 unterschreitet, der Sollwert der DC-Spannung für im Gleichspannungssystem befindliche steuerbare Energiespeicher und/oder -quellen auf einen Scheitelwert der Netzspannung an einer oberen Toleranzgrenze angehoben. Im Gleichspannungssystem befindliche Verbraucher und/oder andere Geräteeinheiten sind abgeschaltet. Die Energiespeicher und -quellen heben durch Einspeisung elektrischer Energie die Gleichspannung an, sodass ein Wert Umin2 überschritten wird. Geräteeinheiten, insbesondere Motoren oder Roboter, werden zugeschaltet, wodurch diese in eine definierte Position fahren oder wenigstens einen Teil dieser Fahrt bewältigen können, bevor die Gleichspannung im Gleichspannungssystem durch einen Verbrauch elektrischer Energie wieder unter den Wert Umin2 absinkt. Die Energiespeicher und -quellen heben die Gleichspannung durch Einspeisung elektrischer Energie erneut an, sodass bei Überschreiten des Werts Umin2 Roboter oder Motoren den restlichen Teil ihrer Fahrt in eine definierte Position ausführen können. Ein derartiger zyklischer Ablauf gewährleistet ein sicheres System, da ein Netzausfall keine undefinierten Zustände für Roboter oder Motoren mit sich bringt. Zudem können lange Ausfallzeiten des speisenden Dreiphasenwechselspannungsnetzes überbrückt werden.

In dem bisher beschriebenen Verfahren kann der Zustand entstehen, dass die steuerbaren Energiespeicher und/oder - quellen die DC-Spannung dauerhaft zwischen den Werten Umin1 und Umin2 halten. Kehrt in diesem Zustand das Dreiphasenwechselspannungsnetz wieder, kann dieses keine Energie liefern, da die Einspeiseschaltung vom Dreiphasenwechselspannungsnetz getrennt ist. Wird die Netzwiederkehr hierfür detektiert, sperrt eine übergeordnete Steuereinheit in einer erfindungsgemäßen Ausführungsform Verbraucher, die weniger kritisch sind. Dadurch steigt die DC-Spannung über den Wert Umin1, sodass die Schalter, welche die Einspeiseschaltung vom Dreiphasenwechselspannungsnetz trennen, geschlossen werden können, um elektrische Energie in das Gleichspannungssystem einzuspeisen. Die vorher abgeschalteten weniger kritischen Verbraucher werden zugeschaltet. Dieses Verfahren ermöglicht einen unterbrechungsfreien Betrieb sensibler Verbraucher.

Im Folgenden wird die Erfindung anhand der in den Figuren dargestellten Ausführungsbeispiele näher beschrieben und erläutert. Es zeigen:
FIG 1 eine aktive Einspeiseschaltung mit Vorladeeinrichtung nach dem Stand der Technik,
FIG 2 eine Ausgestaltung eines über eine Einspeiseschaltung an ein dreiphasiges Wechselspannungsnetz angekoppeltes Gleichspannungssystem mit dezentralen Vorladeeinrichtungen,
FIG 3 ein Verfahren zum Betreiben eines elektrischen Gleichspannungssystems und
FIG 4 eine Ausgestaltung eines Schalt- und Schutzorgans mit Vorladewiderstand.

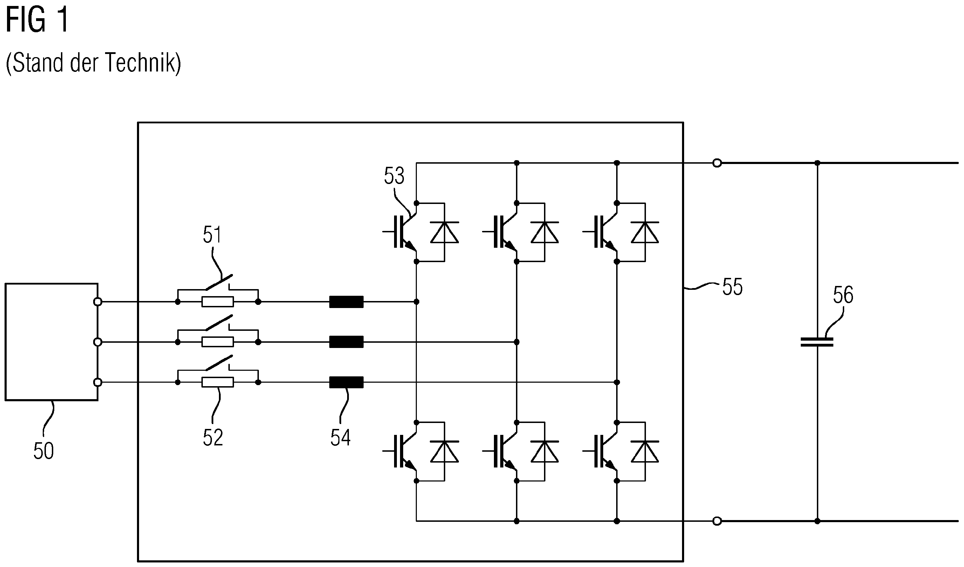

FIG 1 zeigt eine Ausgestaltung einer aktiven Einspeiseschaltung mit Vorladeeinrichtung 55, auch Einspeiseschaltung genannt, nach dem Stand der Technik. An ein dreiphasiges Wechselspannungsnetz 50 wird hierbei über eine Einspeiseschaltung 55 ein Gleichspannungssystem gekoppelt. Die Einspeiseschaltung 55 verfügt über einen Schalter 51 pro Phase, der einen Vorladewiderstand 52 pro Phase überbrücken kann.

Zudem verfügt die Einspeiseschaltung über Drosseln 54, die erforderlich sind, um Energie für ein Hochsetzen der DC-Spannung zwischenzuspeichern. Die Gleichrichtung einer dreiphasigen Wechselspannung aus dem dreiphasigen Wechselspannungsnetz 50 wird mittels steuerbarer Halbleiter 53, insbesondere IGBTs, bewerkstelligt. Jedoch ist auch der Einsatz von passiven Bauelementen, insbesondere Dioden, für die Gleichrichtung einer dreiphasigen Wechselspannung möglich. Die Einspeiseschaltung verfügt zudem über einen Glättungskondensator 56. Ist das Gleichspannungssystem ungeladen, muss beim Einschalten des dreiphasigen Wechselspannungsnetzes 50 eine Begrenzung des Stromes gewährleistet sein, da eine Spannungsdifferenz zwischen einer Gleichspannung im Gleichspannungssystem und einer gleichgerichteten Wechselspannung einen nicht steuerbaren Strom zur Folge hat, der empfindliche Bauteile im Gleichspannungssystem beschädigt oder zerstört. Diese Begrenzung des Stromes wird durch die Vorladeeinrichtung in der Einspeiseschaltung 55 erreicht. Zu Beginn wird hierbei der Vorladewiderstand 52 genutzt. Dieser dient einer Begrenzung des Stromes. Ist das Gleichspannungssystem schließlich geladen und entspricht seine Gleichspannung der gleichgerichteten Wechselspannung, wird der in der aktiven Einspeiseschaltung 55 vorhandene Vorladewiderstand 52 mittels des Schalters 51 überbrückt.

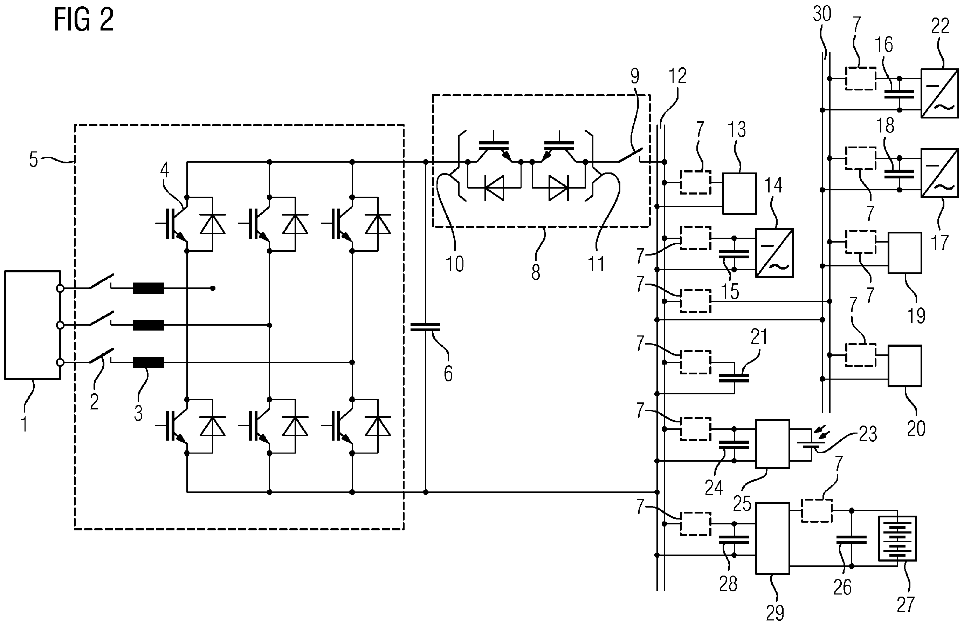

FIG 2 zeigt eine Ausgestaltung des erfindungsgemäßen Aufbaus eines Gleichspannungssystems, welches mittels einer Einspeiseschaltung 5 an ein dreiphasiges Wechselspannungsnetz 1 gekoppelt ist. Eine derartige Ausführung ist z. B. innerhalb einer Fabrikanlage möglich.

Das dreiphasige Wechselspannungsnetz 1 ist über einen Schalter 2 pro Phase und eine Drossel 3 pro Phase mit einer Gleichrichterschaltung verbunden. Die Gleichrichterschaltung umfasst sechs passive Bauelemente, insbesondere Dioden, oder sechs steuerbare Halbleiter, insbesondere IGBTs mit antiparalleler Freilaufdiode 4. Ein Kondensator 6 ist der Einspeiseschaltung 5 und einer Gleichspannungssammelschiene 12 zwischengeschaltet. Der Kondensator 6 dient einer Glättung der gleichgerichteten Wechselspannung. Zur Vorladung des Kondensators 6 kann eine Vorladeschaltung nach FIG 1 vorhanden sein.

Die Gleichspannungssammelschiene 12 ist über ein Schalt- und Schutzorgan 8 mit der Einspeiseschaltung 5 verbunden. Das Schalt- und Schutzorgan 8 umfasst eine antiserielle Schaltung von zwei steuerbaren Halbleitern, vorzugsweise IGBTs mit antiparalleler Freilaufdiode 10, 11 sowie einen in Serie zu dieser Anordnung angeordneten Schalter 9.

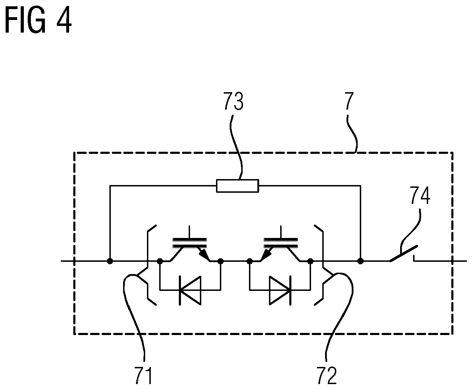

An die Gleichspannungssammelschiene 12 schließt ein Gleichspannungssystem an. Im Gleichspannungssystem sind erfindungsgemäß verschiedene Geräte vorhanden. Über ein erstes dezentrales Schalt- und Schutzorgan mit Vorladewiderstand 7 (dezentrale Vorladeeinrichtung) ist ein erster Verbraucher 13 an die Gleichspannungssammelschiene 12 angeschlossen. Das Schalt- und Schutzorgan mit Vorladewiderstand 7 wird in FIG 4 beschrieben und umfasst einen Vorladewiderstand 73. Dieser Vorladewiderstand 73 ist einer antiseriellen Schaltung von zwei steuerbaren Halbleitern, vorzugsweise IGBTs mit antiparalleler Freilaufdiode 71, 72 parallelgeschaltet. In Serie zu dieser Anordnung oder in Serie zu dem Vorladewiderstand 73 befindet sich ein Schalter 74.

Als erster Verbraucher 13 können insbesondere ein Lüfter, eine Heizung oder eine Lampe angeschlossen werden. Über ein weiteres Schalt- und Schutzorgan mit Vorladewiderstand 7 ist ein erster Wechselrichter 14 sowie ein dem ersten Wechselrichter 14 vorgeschalteter Kondensator 15 an der Gleichspannungssammelschiene 12 angeschlossen. Zudem ist ein Subnetz mittels einer Gleichspannungssammelschiene 30 an die Sammelschiene 12 angeschlossen, wobei dieser Anschluss mittels eines weiteren Schalt- und Schutzorgans mit Vorladeeinrichtung 7 erfolgen kann. In diesem Subnetz finden sich ein zweiter und ein dritter Verbraucher 19 und 20, die jeweils über ein weiteres Schalt- und Schutzorgan mit Vorladewiderstand 7 mit der Sammelschiene 30 des Subnetzes verbunden sind. Zudem finden sich ein über ein weiteres Schalt- und Schutzorgan mit Vorladewiderstand 7 verbundener zweiter Wechselrichter 22 mit vorgeschaltetem Kondensator 16 sowie ein über ein weiteres Schalt- und Schutzorgan mit Vorladewiderstand 7 angeschlossener dritter Wechselrichter 17 mit vorgelagertem Kondensator 18 im Gleichspannungssubnetz. An die Wechselrichter werden insbesondere Motoren oder Roboter angeschlossen. Das Gleichspannungssystem verfügt zudem über einen kapazitiven Speicher 21, der über ein weiteres Schalt- und Schutzorgan mit Vorladewiderstand 7 an der Gleichspannungssammelschiene 12 angeschlossen ist.

Zudem ist auch eine Energiequelle in Form einer Photovoltaik-Anlage 23 im Gleichspannungsnetz verfügbar. Die Photovoltaik-Anlage 23 ist über einen DC/DC-Steller 25 an einen Kondensator 24 angebunden. Dieser kann ebenfalls über ein Schalt- und Schutzorgan mit Vorladewiderstand 7 mit der Gleichspannungssammelschiene 12 verbunden sein.

Auch chemische Speicher vorzugsweise in Form von Batterien sind in diesem Gleichspannungssystem möglich. Die Batterie 27 kann über einen Kondensator 26 und ein Schalt- und Schutzorgan mit Vorladewiderstand 7 mit einem DC/DC-Steller 29 verbunden sein, welcher wiederum über einen Kondensator 28 und ein Schalt- und Schutzorgan mit Vorladewiderstand 7 an der Gleichspannungssammelschiene 12 angebunden sein kann.

Die kapazitive Speichereinheit 21, die Photovoltaik-Anlage 23 und die Batterie 27 ermöglichen das Aufrechterhalten einer definierten Gleichspannung im Gleichspannungssystem sowie auch die Anhebung einer Gleichspannung im Gleichspannungssystem wie bereits erläutert. Derartige Einrichtungen sind daher unabkömmlich, um in einem Fehlerfall, bei Absinken einer speisenden Spannung oder eines Ausfalls des dreiphasigen Wechselspannungsnetzes 1 die Gleichspannung im Gleichspannungssystem aufrechtzuerhalten.

In einer alternativen Ausführungsform (nicht dargestellt) des Gleichspannungssystems ist nur Verbrauchern (13, 19, 20) eine dezentrale Vorladeeinrichtung (7) vorgeschaltet bzw. in diese integriert, nicht aber den Energiespeichern und -quellen (21, 23, 27).

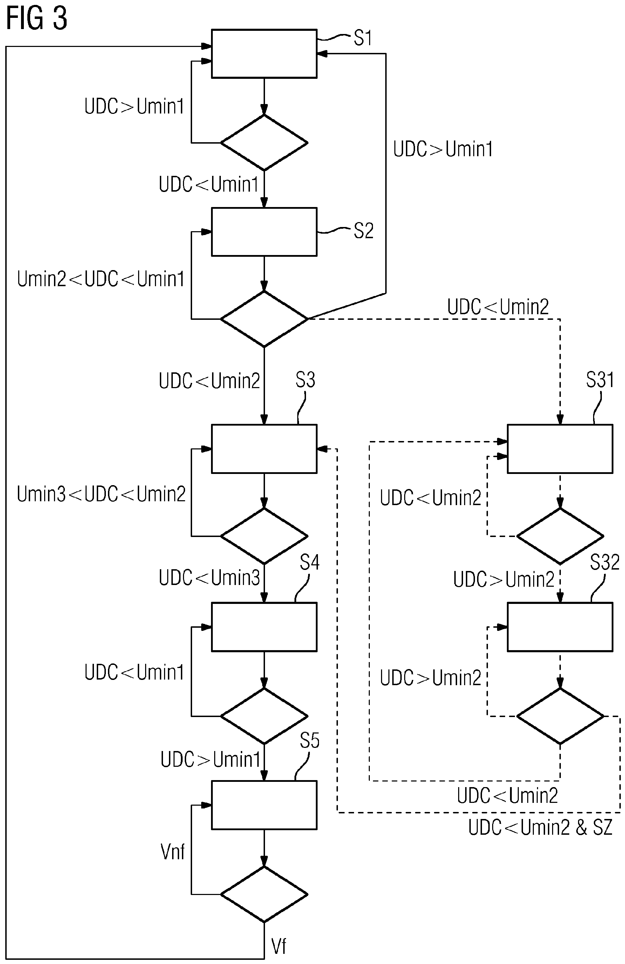

FIG 3 zeigt ein Verfahren zum Betreiben eines elektrischen Gleichspannungssystems, welches mittels einer Einspeiseschaltung an wenigstens ein Wechselspannungsnetz zur Einspeisung elektrischer Energie in das Gleichspannungssystem gekoppelt ist, wobei das elektrische Gleichspannungssystem, welches Geräteeinheiten umfasst, die über jeweils wenigstens eine dezentrale Vorladeeinrichtung mit einer Sammelschiene verbunden sind, in Abhängigkeit von einem an der Sammelschiene anliegenden Spannungswert betrieben wird.

Das Verfahren zum Betreiben eines elektrischen Gleichspannungssystems wird vorzugsweise dann eingesetzt, wenn sich das Gleichspannungssystem in einem später erläuterten Normalbetrieb befindet und ein Ausfall eines speisenden Wechselspannungsnetzes auftritt.

Der Normalbetrieb wird mittels einer Zuschaltung des Gleichspannungssystems an ein Wechselspannungssystem folgendermaßen erreicht: Das Gleichspannungssystem wird an ein dreiphasiges Wechselspannungsnetz über eine Einspeiseschaltung angeschlossen und somit mittels eines Vorladevorgangs hochgefahren. Alle dezentralen Vorladeeinrichtungen im Gleichspannungssystem sind bei diesem Vorladevorgang aktiv. In der jeweiligen dezentralen Vorladeeinrichtung ist der Schalter geschlossen und eine Steuereinheit sperrt wenigstens einen IGBT, sodass ein Ladestrom über den Widerstand fließt. Dadurch werden alle im Gleichspannungssystem befindlichen Kapazitäten geladen. Sobald die Differenz zwischen einer im Gleichspannungssystem bestehenden Spannung und der Spannung an einer im Gleichspannungssystem befindlichen Kapazität einen definierten Wert unterschreitet, wird der Vorladevorgang für diese Kapazität beendet und die zugehörige dezentrale Vorladeeinrichtung deaktiviert. Wenn alle dezentralen Vorladeeinrichtungen deaktiviert sind, geht das Gleichspannungssystem in den Normalbetrieb über.

In Verfahrensschritt S1 befindet sich das Gleichspannungssystem im Normalbetrieb. Die Einspeiseschaltung ist an das Wechselspannungsnetz angebunden, die dezentralen Vorladeeinrichtungen sind deaktiviert. Es wird keine Vorladung mehr betrieben. Solange die Gleichspannung im Gleichspannungssystem, auch UDC genannt, größer oder gleich einem Mindestwert Umin1 ist - in der Figur mit UDC>Umin1 beschrieben -, bleibt das Gleichspannungssystem im Normalbetrieb und somit im Verfahrensschritt S1.

Unterschreitet die DC-Spannung jedoch den Mindestwert Umin1, was insbesondere durch einen Ausfall des dreiphasigen Wechselspannungsnetzes ausgelöst wird, gilt UDC<Umin1 und die Einspeiseschaltung wird in Verfahrensschritt S2 vom Wechselspannungsnetz getrennt.

Im Gleichspannungssystem befindliche steuerbare Energiespeicher und -quellen, insbesondere kapazitive Speicher, Batterien oder Photovoltaik-Anlagen, werden daraufhin von der Steuereinheit veranlasst, elektrische Energie ins Gleichspannungssystem einzuspeisen. Zudem werden im elektrischen Gleichspannungssystem befindliche weniger kritische Verbraucher, insbesondere Lüfter, abgeschaltet oder abgeregelt, um den Energieverbrauch zu senken.

Durch diese Maßnahmen ist es möglich, dass die Gleichspannung im Gleichspannungssystem erneut den Mindestwert Umin1 überschreitet. Dies ist durch UDC>Umin1 in der Figur gekennzeichnet.

Wenn die Gleichspannung den Mindestwert Umin1 nicht überschreitet und einen Mindestwert Umin2 nicht unterschreitet - mit Umin2<UDC<Umin1 gekennzeichnet -, wird in Verfahrensschritt S2 verblieben. Der Verfahrensschritt S2 zeichnet sich zudem dadurch aus, dass die Einspeiseschaltung auch bei Wiederkehr des Wechselspannungsnetzes nicht zugeschaltet wird.

Sinkt die Gleichspannung noch weiter und unterschreitet den Mindestwert Umin2 - mit UDC<Umin2 gekennzeichnet - werden in Verfahrensschritt S3 alle dezentralen Vorladeeinrichtungen aktiviert und alle Geräte im Gleichspannungssystem abgeschaltet. Die steuerbaren Energiespeicher und/oder -quellen werden deaktiviert und speisen keine Energie mehr ein.

Wenn die Gleichspannung den Mindestwert Umin2 nicht überschreitet und einen Mindestwert Umin3 nicht unterschreitet - mit Umin3<UDC<Umin2 gekennzeichnet -, wird in Verfahrensschritt S3 verblieben. Auch im Verfahrensschritt S3 wird bei Wiederkehr des Wechselspannungsnetzes die Einspeiseschaltung nicht zugeschaltet.

Indem zuerst die dezentralen Vorladeeinrichtungen aktiviert und erst anschließend alle Verbraucher abgeschaltet werden, sinkt die Gleichspannung an den Geräten weiter ab, sodass ein Mindestwert Umin3 unterschritten wird.

Mit Unterschreiten des Mindestwerts Umin3, mit UDC<Umin3 gekennzeichnet, wird ein Zustand erreicht, in welchem alle dezentralen Vorladeeinrichtungen sicher aktiviert sind.

Anschließend wird in einem Verfahrensschritt S4 die Einspeiseschaltung zugeschaltet und auf die Wiederkehr des dreiphasigen Wechselspannungsnetzes gewartet. Solange UDC<Umin1 gilt, wird in diesem Zustand verblieben. Die steuerbaren Energiespeicher und/oder -quellen speisen keine Energie mehr ein.

Alternativ zur Unterschreitung des Mindestwerts Umin3 kann als Indikator dafür, dass alle dezentralen Vorladeeinrichtungen aktiviert sind, auch eine Aktivierungsrückmeldung der dezentralen Vorladeeinrichtungen erfolgen oder eine Mindestzeit tmin seit dem Unterschreiten der Mindestspannung Umin2, die die dezentralen Vorladeeinrichtungen zur Aktivierung höchstens benötigen, abgewartet werden. Bei diesen Alternativen ist es unerheblich, ob zuerst die dezentralen Vorladeeinrichtungen aktiviert oder die Geräte abgeschaltet werden.

Kehrt das Dreiphasenwechselspannungsnetz wieder und gilt UDC>Umin1, beginnt der Vorladevorgang in Verfahrensschritt S5 erneut wie bereits oben bei der Zuschaltung des Gleichspannungssystems beschrieben. Der Beginn des Vorladevorgangs kann an eine Freigabe durch eine Steuereinheit gebunden sein.

Ist der Vorladevorgang abgeschlossen, in der Figur mit Vf beschrieben, wird das Gleichspannungssystem in den Normalbetrieb im Verfahrensschritt S1 zurückgeführt. Ist der Vorladevorgang nicht abgeschlossen, mit Vnf beschrieben, wird in dem Verfahrensschritt S5 verblieben.

In einer alternativen Ausführungsform wird bei einer Gleichspannung im Gleichspannungssystem, die einen Mindestwert Umin2 unterschreitet - in der Figur mit UDC<Umin2 im gestrichelten Abzweig gekennzeichnet, der Sollwert der DC-Spannung für im Gleichspannungssystem befindliche steuerbare Energiespeicher und/oder -quellen im Verfahrensschritt S31 auf einen Scheitelwert der Netzspannung an einer oberen Toleranzgrenze angehoben. Alle im Gleichspannungssystem befindlichen Verbraucher werden abgeschaltet.

Die Energiespeicher und -quellen heben durch Einspeisung elektrischer Energie die Gleichspannung an. Solange UDC<Umin2 gilt, wird in Verfahrensschritt S31 verblieben.

In diesem Verfahrensschritt 31 sind die dezentralen Vorladeeinrichtungen weiterhin aktiviert und die Einspeiseschaltung kann bei Wiederkehr des Wechselspannungsnetzes zugeschaltet werden. Der Vorladevorgang für den Übergang in den Normalbetrieb kann gestartet werden.

Wird der Mindestwert Umin2 überschritten - mit UDC>Umin2 gekennzeichnet, werden die dezentralen Vorladeeinrichtungen insbesondere kritischer Geräte, vorzugsweise von Motoren oder Robotern, in Verfahrensschritt S32 deaktiviert und die kritischen Geräte zugeschaltet, wodurch diese, solange UDC>Umin2 gilt, in eine definierte Position fahren oder wenigstens einen Teil dieser Fahrt bewältigen können, bevor die Gleichspannung im Gleichspannungssystem durch einen Verbrauch elektrischer Energie wieder unter den Wert Umin2 absinkt - in der Figur mit UDC<Umin2 gekennzeichnet.

Im Verfahrensschritt 32 wird zudem die Einspeiseschaltung bei Wiederkehr des Wechselspannungsnetzes nicht zugeschaltet. Ist die definierte Position erreicht und gilt zudem UDC<Umin2, mit UDC<Umin2 & SZ gekennzeichnet, geht das Gleichspannungssystem in S3 über.

Die Maßnahmen des Verfahrensschritts S31 werden erneut ergriffen. Die Energiespeicher und -quellen heben die Gleichspannung durch Einspeisung elektrischer Energie erneut an, sodass bei Überschreiten des Werts Umin2 - mit UDC>Umin2 gekennzeichnet - in Verfahrensschritt S32 Roboter oder Motoren den restlichen Teil ihrer Fahrt in eine definierte Position ausführen können. Übersteigt die DC-Spannung im Gleichspannungssystem in einer nicht in der Figur abgebildeten Ausführungsform in den Zuständen S31 oder S32 die Spannung Umin1, kann bei Wiederkehr des Wechselspannungsnetzes die Einspeiseschaltung zugeschaltet werden. Das Gleichspannungssystem kann nach Beendigung der Vorladung in den Zustand S1 übergehen.

In dem beschriebenen Verfahren kann es dazu kommen, dass das Gleichspannungssystem dauerhaft in S32 verbleibt, indem die DC-Spannung zwischen den Werten Umin1 und Umin2 verbleibt und die Energiespeicher und/oder -quellen genau den Energiebedarf der kritischen Verbraucher, insbesondere Motoren und Roboter, decken. In diesem Fall ist vorgesehen, dass bei Wiederkehr des Wechselspannungsnetzes die Einspeiseschaltung nicht zugeschaltet wird und nicht kritische Verbraucher nicht in Betrieb genommen werden. Um diesen Zustand zu vermeiden, können in einer in der Figur nicht abgebildeten Ausführungsform die Energiespeicher und/oder -quellen deaktiviert werden, sobald die kritischen Verbraucher ihre definierte Position erreicht haben. Damit sinkt die Spannung im Gleichspannungssystem unter den Wert Umin2 und das Gleichspannungssystem geht in S31 über und wartet dort auf die Wiederkehr des Wechselspannungsnetzes.

FIG 4 zeigt eine Ausgestaltung eines dezentralen Schalt- und Schutzorgans mit Vorladewiderstand 7 (dezentrale Vorladeeinrichtung). Dieses umfasst einen Vorladewiderstand 73. Dieser Vorladewiderstand 73 ist einer antiseriellen Schaltung von zwei steuerbaren Halbleitern, vorzugsweise IGBTs mit antiparalleler Freilaufdiode 71, 72 parallelgeschaltet. In Serie zu dieser Anordnung oder in Serie zu dem Vorladewiderstand 73 befindet sich ein Schalter 74. Das in FIG 4 ausgestaltete Schalt- und Schutzorgan mit Vorladeeinrichtung 7 ist in die in FIG 2 dargestellten Geräte intergiert oder diesen vorgeschaltet.

## Patentansprüche

1. Elektrisches Gleichspannungssystem, welches an wenigstens ein Wechselspannungsnetz (1) zur Einspeisung elektrischer Energie in das Gleichspannungssystem gekoppelt ist, **dadurch gekennzeichnet, dass** mehrere im Gleichspannungssystem befindliche Geräteeinheiten über jeweils wenigstens eine dezentrale Vorladeeinrichtung (7) mit einer Sammelschiene (12) verbunden sind.

2. Elektrisches Gleichspannungssystem nach Anspruch 1, wobei das Gleichspannungssystem mittels einer Einspeiseschaltung (5) an das Wechselspannungsnetz (1), das vorzugsweise als Dreiphasenwechselspannungsnetz ausgeführt ist, gekoppelt ist.

3. Elektrisches Gleichspannungssystem nach einem der Ansprüche 1 oder 2, wobei wenigstens eine im Gleichspannungssystem befindliche Geräteeinheit eine dezentrale Vorladeeinrichtung (7) umfasst.

4. Elektrisches Gleichspannungssystem nach einem der Ansprüche 1 bis 3, wobei wenigstens einer im Gleichspannungssystem befindlichen Geräteeinheit eine dezentrale Vorladeeinrichtung (7) vorgeschaltet ist.

5. Elektrisches Gleichspannungssystem nach einem der Ansprüche 1 bis 4, wobei jede im Gleichspannungssystem befindliche Geräteeinheit über genau eine dezentrale Vorladeeinrichtung (7) mit der Sammelschiene (12) verbunden ist.

6. Elektrisches Gleichspannungssystem nach einem der Ansprüche 1 bis 5, wobei die dezentrale Vorladeeinrichtung (7) wenigstens einen Widerstand (73) umfasst.

7. Elektrisches Gleichspannungssystem nach Anspruch 6, wobei der Widerstand (73) parallel zu zwei Halbleitern (71, 72) angeordnet ist, die eine Schaltanordnung bilden, und die dezentrale Vorladeeinrichtung (7) wenigstens einen zu dieser Schaltanordnung oder dem Widerstand (73) in Serie angeordneten Schalter (74) aufweist.

8. Elektrisches Gleichspannungssystem nach Anspruch 7, wobei die zwei Halbleiter (71, 72) antiseriell angeordnet sind.

9. Elektrisches Gleichspannungssystem nach einem der Ansprüche 7 oder 8, wobei die Halbleiter (71, 72) als steuerbare Bipolartransistoren, insbesondere IGBTs, oder steuerbare Feldeffekttransistoren, insbesondere MOSFETs, ausgeführt sind.

10. Elektrisches Gleichspannungssystem nach einem der Ansprüche 1 bis 9, wobei die dezentrale Vorladeeinrichtung (7) über wenigstens eine Überwachungseinheit, vorzugsweise zur Spannungsmessung, verfügt oder mit einer Überwachungseinheit verbunden ist.

11. Elektrisches Gleichspannungssystem nach einem der Ansprüche 1 bis 10, wobei die dezentrale Vorladeeinrichtung (7) über wenigstens eine Steuereinheit verfügt oder mit einer Steuereinheit verbunden ist.

12. Elektrisches Gleichspannungssystem nach Anspruch 11, wobei die Steuereinheit unterhalb eines definierten Spannungswerts wenigstens einen Halbleiter sperrt zu einer Unterbrechung eines Stromflusses durch die Halbleiter und oberhalb dieses Spannungswerts wenigstens einen Halbleiter leitend schaltet zu einer Ermöglichung des Stromflusses durch die Halbleiter (71, 72).

13. Elektrisches Gleichspannungssystem nach einem der Ansprüche 1 bis 11, wobei die Einspeiseschaltung (5) vom Wechselspannungsnetz (1) trennbar ausgeführt ist.

14. Elektrisches Gleichspannungssystem nach einem der Ansprüche 1 bis 12, wobei die Einspeiseschaltung (5) eine Gleichrichterschaltung umfasst.

15. Verfahren zum Betreiben eines elektrischen Gleichspannungssystems, welches mittels einer Einspeiseschaltung (5) an wenigstens ein Wechselspannungsnetz (1) zur Einspeisung elektrischer Energie in das Gleichspannungssystem gekoppelt ist, **dadurch gekennzeichnet, dass** das elektrische Gleichspannungssystem, welches Geräteeinheiten umfasst, die über jeweils wenigstens eine dezentrale Vorladeeinrichtung (7) mit einer Sammelschiene (12) verbunden sind, in Abhängigkeit von einem an der Sammelschiene anliegenden Spannungswert betrieben wird.

16. Verfahren nach Anspruch 15, wobei,
- wenn der Spannungswert größer als eine Mindestspannung Umin1 ist, das elektrische Gleichspannungssystem in einem Normalbetrieb betrieben wird, bei welchem die Einspeiseschaltung (5) an das Wechselspannungsnetz angebunden ist und die dezentrale Vorladeeinrichtung (7) deaktiviert ist, und
- wenn der Spannungswert die Mindestspannung Umin1 unterschreitet, die Einspeiseschaltung (5) vom Wechselspannungsnetz (1) getrennt wird.

17. Verfahren nach einem der Ansprüche 15 oder 16, wobei, wenn der Spannungswert kleiner als die Mindestspannung Umin1 ist und größer als eine Mindestspannung Umin2 ist, in das elektrische Gleichspannungssystem durch im elektrischen Gleichspannungssystem befindliche steuerbare Energiespeicher (21, 27) und/oder Energiequellen (23) elektrische Energie eingespeist wird.

18. Verfahren nach einem der Ansprüche 16 oder 17, wobei, wenn der Spannungswert kleiner als die Mindestspannung Umin1 ist und größer als eine bzw. die Mindestspannung Umin2 ist, im elektrischen Gleichspannungssystem befindliche Verbraucher (13, 19, 20) abgeschaltet werden.

19. Verfahren nach einem der Ansprüche 16 bis 18, wobei, wenn der Spannungswert die Mindestspannung Umin2 unterschreitet, im elektrischen Gleichspannungssystem befindliche dezentrale Vorladeeinrichtungen (7) aktiviert werden.

20. Verfahren nach einem der Ansprüche 17 bis 19, wobei, wenn der Spannungswert kleiner als die Mindestspannung Umin2 ist und größer als eine Mindestspannung Umin3 ist, die im elektrischen Gleichspannungssystem befindlichen steuerbaren Energiespeicher (21, 27) und/oder Energiequellen (23) deaktiviert werden.

21. Verfahren nach einem der Ansprüche 17 bis 20, wobei, wenn der Spannungswert kleiner als die Mindestspannung Umin2 ist und größer als die Mindestspannung Umin3 ist, alle im elektrischen Gleichspannungssystem befindlichen Verbraucher (13, 19, 20) abgeschaltet werden.

22. Verfahren nach einem der Ansprüche 17 bis 21, wobei, wenn der Spannungswert die Mindestspannung Umin3 unterschreitet oder eine Mindestzeit tmin seit dem Unterschreiten der Mindestspannung Umin2 vergangen ist oder alle dezentralen Vorladeeinrichtungen ein Rückmeldesignal über ihre Aktivierung an eine übergeordnete Steuereinheit gesendet haben, die Einspeiseschaltung (5) zugeschaltet wird.

23. Verfahren nach Anspruch 22, wobei, wenn der Spannungswert die Mindestspannung Umin1 überschreitet, die dezentralen Vorladeeinrichtungen (7) deaktiviert werden.

24. Verfahren nach einem der Ansprüche 16 bis 18, wobei,
- wenn der Spannungswert die Mindestspannung Umin2 unterschreitet, alle im elektrischen Gleichspannungssystem befindlichen Verbraucher (13, 19, 20) abgeschaltet werden und
- wenn der Spannungswert die Mindestspannung Umin2 nach einer Einspeisung elektrischer Energie durch die im elektrischen Gleichspannungssystem befindlichen steuerbaren Energiespeicher (21, 27) und/oder Energiequellen (23) überschreitet, wenigstens ein bestimmter Verbraucher (13) angeschaltet wird.
